# EUROPÄISCHE PATENTSCHRIFT

(11) **EP 3 164 433 B1**
(45) Veröffentlichungstag und Bekanntmachung des Hinweises auf die Patenterteilung: **09.01.2019**
(21) Anmeldenummer: 15728560.2
(22) Anmeldetag: 16.06.2015
(51) Int. Cl.: C08G 18/48, C09D 5/02, C08G 18/80, C09D 5/44, C09D 133/06, C09D 175/04, C08G 18/42, C08L 75/04

(54) **CARBOXYFUNKTIONELLE POLYETHER-BASIERTE REAKTIONSPRODUKTE UND WÄSSRIGE BASISLACKE ENTHALTEND DIE REAKTIONSPRODUKTE**
CARBOXYFUNCTIONAL POLYETHER BASED REACTION PRODUCTS AND AQUEOUS BASE PAINTS CONTAINING THE REACTION PRODUCTS
PRODUITS DE RÉACTION À BASE DE POLYÉTHER À FONCTION CARBOXY ET APPRÊT EN BASE AQUEUSE CONTENANT LES PRODUITS DE RÉACTION

(30) Priorität: 01.07.2014 EP 14175111
(43) Veröffentlichungstag der Anmeldung: 10.05.2017
(73) Patentinhaber: BASF Coatings GmbH, 48165 Münster (DE)
(72) Erfinder: STEINMETZ, Bernhard, 97535 Rütschenhausen (DE); HOFFMANN, Peter, 48308 Senden (DE); REUTER, Hardy, 48167 Münster (DE)
(74) Vertreter: BASF IP Association
(86) Internationale Anmeldenummer: PCT/EP2015/063414
(87) Internationale Veröffentlichungsnummer: WO 2016/000947

(56) Entgegenhaltungen:
- EP-A1- 1 454 971
- US-A1- 2002 114 955
- US-A1- 2014 031 484

## Beschreibung

Die vorliegende Erfindung betrifft neuartige carboxyfunktionelle Polyether-basierte Reaktionsprodukte. Sie betrifft ferner wässrige Basislacke, welche die Reaktionsprodukte enthalten sowie die Verwendung der besagten Reaktionsprodukte in wässrigen Basislacken. Sie betrifft auch ein Verfahren zur Herstellung von Mehrschichtlackierungen unter Einsatz von wässrigen Basislacken sowie die mit Hilfe des besagten Verfahrens herstellbaren Mehrschichtlackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen und ästhetischen Eigenschaften solcher Lackierungen (Beschichtungen) sind enorm.

Ein immer wieder auftretendes und vom Stand der Technik nach wie vor nicht völlig zufriedenstellend gelöstes Problem ist das Auftreten so genannter Nadelstiche, das heißt also die nicht ausreichende Stabilität gegen Nadelstiche. Bei dem aufeinanderfolgenden Aufbringen mehrerer Lacke, beispielsweise Basislack und Klarlack, und dem Verzicht der jeweils separaten Härtung der einzelnen Polymerfilme, können ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche genannt, führen zu einem nachteilhaften optischen Erscheinungsbild. Die durch den Gesamtaufbau von Basislackschicht und Klarlackschicht anfallende Menge an organischen Lösemitteln beziehungsweise Wasser sowie die durch die Applikation eingetragene Luftmenge sind zu groß, als dass sie vollständig innerhalb eines abschließenden Härtungsschritts ohne die Erzeugung von Fehlstellen aus der Mehrschichtlackierung entweichen können. Die Eigenschaften des in diesem Zusammenhang besonders wichtigen Basislacks und der daraus hergestellten Lackschichten werden insbesondere von den im Basislack enthaltenen Bindemitteln und Additiven, beispielsweise speziellen Reaktionsprodukten, bestimmt. Das Dokument EP 1 454 971 A1 (Absätze [0001], [0022]-[0024]) bezieht sich auf das Problem der Nadelstische bei pigmentierten wässrigen Lacken und deren Anwendungen als Mehrschichtlackierungen. Im Absatz [0073] wird die Herstellung eines Polyesters A1 aus PTHF 650 und Trimellithsäureanhydrid offenbart. Nach Abkühlen der Polyesterschmelze auf 85°C wird eine 10%-ige wässrige Dimethylethanolamin-Lösung und anschließend deionisiertes Wasser zugegeben. Eine feinteilige Dispersion mit einem nichtflüchtigen Anteil von 40% und einer Säurezahl von 29 mgKOH/g wird erhalten. Die Berechnung zeigt, dass 1,60 mol Trimellithsäureanhydrid und 2,66 mol Polytetramethylenetherglykol verwendet wurden. Dies entspricht einem molaren Verhältnis von 0,60. Außerdem beträgt die Säurezahl des Polyesters 29 mg KOH/g.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

### Aufgabe

Der vorliegenden Erfindung lag also die Aufgabe zugrunde, ein Reaktionsprodukt zur Verfügung zu stellen, mit dessen Hilfe sich Beschichtungen herstellen lassen, die die oben bezeichneten Nachteile des Standes der Technik nicht länger aufweisen. Insbesondere sollte durch die Bereitstellung eines neuen Reaktionsprodukts und dessen Einsatz in wässrigen Basislacken die Möglichkeit geschaffen werden, Beschichtungen bereitzustellen, die eine hervorragende Stabilität gegen Nadelstiche aufweisen und gleichzeitig durch den Einsatz von eben wässrigen Basislacken auf umweltschonende Weise hergestellt werden können.

### Lösung

Die genannten Aufgaben konnten durch einen pigmentierten wässrigen Basislack gelöst werden, welcher ein carboxyfunktionelles Polyether-basiertes Reaktionsprodukt enthält, welches herstellbar ist durch Umsetzung von
(a) mindestens einer Verbindung der Formel (I)

   X₁ - Y - X₂ (I)

   worin
   X₁ und X₂, unabhängig voneinander, für eine gegenüber Hydroxylgruppen reaktive funktionelle Gruppe stehen und
   Y ein divalenter carboxyfunktioneller aliphatischer oder araliphatischer organischer Rest mit einem zahlenmittleren Molekulargewicht von 100 bis 1000 g/mol ist
   mit
(b) mindestens einem Polyether der allgemeinen Strukturformel (II) 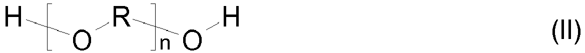 worin
   R ein C₃- bis C₆-Alkylenrest ist und n entsprechend so gewählt ist, dass der Polyether (b) ein zahlenmittleres Molekulargewicht von 200 bis 4000 g/mol besitzt,
   wobei die Komponenten (a) und (b) bei der Umsetzung in einem molaren Verhältnis von 0,7/2,3 bis 1,6/1,7 eingesetzt werden und das resultierende Reaktionsprodukt ein zahlenmittleres Molekulargewicht von 500 bis 15000 g/mol aufweist und eine Säurezahl von 10 bis 120 mg KOH/g besitzt.

Die Bedingung, dass n so gewählt wird, dass der besagte Polyether ein zahlenmittleres Molekulargewicht von 200 bis 4000 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14. Anhand der gegebenen Vorgaben weiß der Fachmann problemlos, ein entsprechendes Reaktionsprodukt herzustellen beziehungsweise auszuwählen. Davon abgesehen geben die weiter unten folgenden Beschreibung und insbesondere die Beispiele nochmals zusätzliche Informationen. Der Parameter n ist also genauso wie das zahlenmittlere Molekulargewicht als ein statistischer Mittelwert zu verstehen.

Der neue Basislack wird in der Folge auch als erfindungsgemäßer Basislack bezeichnet. Bevorzugte Ausführungsformen des erfindungsgemäßen Basislacks gehen aus der folgenden Beschreibung sowie den Unteransprüchen hervor.

Ebenfalls Gegenstand der vorliegenden Erfindung ist das Reaktionsprodukt an sich sowie die Verwendung des Reaktionsprodukts in wässrigen Basislacken zur Verbesserung der Stabilität gegen Nadelstiche. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

Durch den Einsatz der erfindungsgemäßen Reaktionsprodukte werden Basislacke erhalten, deren Verwendung bei der Herstellung von Beschichtungen, insbesondere Mehrschichtlackierungen, zu einer hervorragenden Stabilität gegen Nadelstiche führt. Gleichzeitig wird ein hochwertiges ökologisches Profil gewahrt. Das erfindungsgemäße Reaktionsprodukt sowie der erfindungsgemäße Basislack können im Bereich der Erstlackierung, insbesondere dem Bereich der Automobilindustrie, als auch im Bereich der Automobilreparaturlackierung eingesetzt werden.

### Komponente (a)

Das erfindungsgemäße Reaktionsprodukt ist unter Einsatz mindestens einer speziellen Verbindung (a) der folgenden Formel (I) herstellbar.

X₁ - Y - X₂ (I)

worin
X₁ und X₂, unabhängig voneinander, für eine gegenüber Hydroxylgruppen reaktive funktionelle Gruppe stehen und
Y ein divalenter aliphatischer oder araliphatischer, carboxyfunktioneller organischer Rest mit einem zahlenmittleren Molekulargewicht von 100 bis 1000 g/mol ist.

Die funktionellen Gruppen X₁ und X₂ sind gegenüber Hydroxylgruppen reaktiv. Das heißt, sie reagieren unter üblich gewählten Bedingungen nach bekannten Mechanismen wie Kondensations- oder Additionsreaktionen mit Hydroxylgruppen. Auf diese Weise kann dann eine Verknüpfung der Komponente (a) mit dem Polyether (b) realisiert werden. Solche Gruppen sind dem Fachmann auf dem einschlägigen Gebiet bekannt. Möglich sind beispielsweise Isocyanat-, Carboxyl-, Epoxy-, Carbamat- und Methylolgruppen. Bevorzugt sind Isocyanatgruppen sowie Carboxylgruppen. Bevorzugt sind die beiden Gruppen X₁ und X₂ identisch.

Das erfindungsgemäße Reaktionsprodukt ist herstellbar unter Einsatz solcher Komponenten (a) mit entsprechenden Gruppen X. Dies bedeutet aber nicht zwingend, dass die entsprechende Komponente, in ihrer nicht reagierten Form, zwingend auch die genannte Struktur nach Formel (I) aufweisen muss. Beispielhaft sei auf Komponenten verwiesen, die von Carbonsäuregruppen abgeleitete Anhydridgruppen aufweisen. Wird ein Anhydrid eingesetzt, so hat die entsprechende Komponente in ihrer nicht reagierten Form offensichtlich nicht eine Struktur nach Formel (I). Jedoch würde bei Reaktion mit einer Hydroxylgruppe eines Polyethers (b) unter Öffnung des Anhydridrings letztlich ein Addukt resultieren, in dem genauso wie bei einem Produkt aus carboxyfunktioneller Komponente (a) mit hydroxyfunktionellem Polyether (b) eine verknüpfende Esterbindung besteht.

Der Rest Y ist ein divalenter carboxyfunktioneller organischer Rest mit einem zahlenmittleren Molekulargewicht von 100 bis 1000 g/mol. Das zahlenmittlere Molekulargewicht wird im Rahmen der vorliegenden Erfindung, sofern nicht spezifisch anders angegeben, mittels Dampfdruckosmose bestimmt. Gemessen wurde im Rahmen der vorliegenden Erfindung mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde). Im vorliegenden Fall wird also das zahlenmittlere Molekulargewicht der Komponente (a) wie beschrieben gemessen werden und dann durch Subtraktion der Molekulargewichte der beiden funktionellen Gruppen X₁ und X₂ (vorgegeben durch Molekulargewichte der beiden funktionellen Gruppen X₁ und X₂ (vorgegeben durch die bekannten Summenformeln der Gruppen X₁ und X₂) das zahlenmittlere Molekulargewicht des Restes Y ermittelt.

Bei dem Rest kann es sich also um aliphatische, oder araliphatische (gemischt aliphatisch-aromatische) Reste, die jedenfalls mindestens eine Carbonsäuregruppe enthalten, handeln.

Als aliphatisch werden im Rahmen der vorliegenden Erfindung alle organischen Gruppen bezeichnet, die nicht aromatisch sind.

Beispielsweise kann es sich bei dem Rest Y um einen carboxyfunktionellen aliphatischen Kohlenwasserstoffrest handeln, das heißt einen Rest, der - abgesehen von der im Mittel mindestens einen Carbonsäuregruppe - ausschließlich aus Kohlenstoff und Wasserstoff besteht. Diese aliphatischen Kohlenwasserstoffreste können linear, verzweigt oder cyclisch sein, wobei sie gesättigt oder ungesättigt sein können. Natürlich können diese dann neben der mindestens einen Carbonsäuregruppe ausschließlich Kohlenstoff und Wasserstoff enthaltenen Reste auch sowohl cyclische und lineare und/oder verzweigte Anteile enthalten.

Möglich ist auch, dass aliphatische Reste neben den Sauerstoffatomen der im Mittel mindestens einen Carbonsäuregruppe noch weitere Heteroatome enthalten, insbesondere in Form von verbrückenden Gruppen wie Ether-, Ester-, Amid- und/oder Urethangruppen.

Bevorzugt besteht der organische Rest Y aber vornehmlich aus Kohlenstoff und Wasserstoff. Insbesondere bevorzugt weist der Rest Y, neben der im Mittel mindestens einen Carbonsäuregruppe, im Mittel nicht mehr als fünf (null bis fünf), bevorzugt nicht mehr als drei (null bis drei), insbesondere nicht mehr als zwei (null bis zwei) Gruppen mit Heteroatomen auf. Als Gruppen mit Heteroatomen kommen neben den Carbonsäuregruppen weitere endständige funktionelle Gruppen wie Hydroxylgruppen oder Aminogruppen sowie verbrückende Gruppen in Betracht. Bevorzugt enthält der organische Rest Y keine weiteren endständigen funktionellen Gruppen. Demnach ist bevorzugt, dass der organische Rest aus Kohlenstoff, Wasserstoff, im Mittel mindestens einer Carbonsäuregruppe sowie nicht mehr als fünf, nochmals bevorzugt nicht mehr als drei, insbesondere nicht mehr als zwei, verbrückenden Gruppen wie beispielsweise Ether-, Ester-, Amid- und/oder Urethangruppen besteht. Eine bevorzugte verbrückende Gruppe, sofern vorhanden, ist die Urethangruppe.

Der Rest Y ist jedenfalls carboxyfunktionell. Unabhängig davon, dass der Rest also ansonsten ausschließlich Kohlenstoff und Wasserstoff enthalten kann (im Fall eines aliphatischen Kohlenwasserstoffrests, ist im Mittel jedenfalls mindestens eine Carbonsäuregruppe, bevorzugt genau eine Carbonsäuregruppe vorhanden.

In einer bevorzugten Ausführungsform der vorliegenden Erfindung gilt für die Verbindung (a) der Formel (I), dass sie durch Reaktion mindestens einer Dihydroxycarbonsäure mit mindestens einem organischen Diisocyanat, wobei die Hydroxylgruppen der Dihydroxycarbonsäure mit Isocyanatgruppen des mindestens einen organischen Diisocyanats zu Urethanbindungen umgesetzt werden, herstellbar ist. Bevorzugt werden genau eine Dihydroxycarbonsäure und genau ein organisches Diisocyanat eingesetzt.

Aus Formel (I) folgt, dass die Dihydroxycarbonsäure und das organische Diisocyanat dabei in einem solchen molaren Verhältnis eingesetzt werden, dass das Produkt im Mittel zwei gegenüber Hydroxylgruppen reaktive funktionelle Gruppen, nämlich Isocyanatgruppen, enthält. Je nach Molekulargewicht der eingesetzten Ausgangsverbindungen, das heißt Dihydroxycarbonsäure und organisches Isocyanat, und je nach (innerhalb der erfindungsgemäßen Grenzen) gewünschtem Molekulargewicht der Verbindung der Formel (I), kann damit das molare Verhältnis der beiden Ausgangsverbindungen variiert werden, wobei das Diisocyanat jedenfalls im Überschuss einzusetzen ist. Werden beispielsweise ein Äquivalent Dihydroxycarbonsäure mit zwei Äquivalenten organischem Isocyanat umgesetzt, resultiert im Mittel und innerhalb intrinsischer experimenteller Fehlergrenzen ein blockartiges Produkt der Form A-B-A, wobei A für das reagierte Diisocyanat und B für die reagierte Dihydroxycarbonsäure steht. Der Bestandteil B trägt dann eine Carbonsäuregruppe, ist also carboxyfunktionell. Ein solches Produkt würde dann im Mittel und innerhalb der Fehlergrenzen zwei verbrückende Gruppen, nämlich Urethangruppen, aufweisen. Die tatsächlichen Gegebenheiten können im Einzelfall auf einfache Weise durch Berücksichtigung der Molekulargewichte der Ausgangsverbindungen und dem gemessenen zahlenmittleren Molekulargewicht der Verbindung nach Formel (I) festgestellt werden. Werden zwei Äquivalente Dihydroxycarbonsäure mit drei Äquivalenten organischem Isocyanat umgesetzt, Die genannten Verbindungen (a) der Formel (I) und/oder die Ausgangsverbindungen zur Herstellung solcher Verbindungen (a) können im Handel erhalten werden.

### Komponente (b)

Die Herstellung der erfindungsgemäßen Reaktionsprodukte kann unter Einsatz mindestens eines Polyethers der allgemeinen Strukturformel (II) 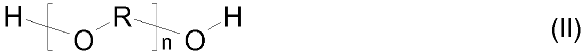 erfolgen, wobei es sich bei R um einen C₃ bis C₆-Alkylrest handelt. Der Index n ist jeweils so zu wählen, dass der besagte Polyether ein zahlenmittleres Molekulargewicht von 200 bis 4000 g/mol besitzt. Bevorzugt besitzt er ein zahlenmittleres Molekulargewicht von 300 bis 3800 g/mol, besonders bevorzugt von 400 bis 3600 g/mol und insbesondere von 500 bis 3400 g/mol und ganz besonders bevorzugt 800 bis 3200 g/mol. Nochmals bevorzugt ist ein Bereich von 800 bis 1200 g/mol. Beispielsweise kann das zahlenmittlere Molekulargewicht bei 1000 g/mol, 2000 g/mol oder 3000 g/mol liegen.

Bekanntermaßen und wie bereits weiter oben erläutert, handelt es sich bei dem zahlenmittleren Molekulargewicht immer um einen statistischen Mittelwert. Selbiges muss also auch für den Parameter n gemäß Formel (I) gelten. Die in diesem Zusammenhang zu erläuternde, für die Komponente (b) gewählte Bezeichnung Polyether versteht sich wie folgt. Bei Polymeren, beispielsweise Polyethern (b), handelt es sich immer um Mischungen von verschieden großen Molekülen. Zumindest ein Teil oder alle dieser Moleküle zeichnen sich durch eine Abfolge von gleichen oder verschiedenen Monomereinheiten (als reagierte Form von Monomeren) aus. Das Polymer beziehungsweise Molekülgemisch enthält also grundsätzlich Moleküle, die mehrere (das heißt mindestens zwei) gleiche oder verschiedene Monomereinheiten enthalten. Selbstverständlich können in dem Gemisch auch anteilig die Monomere selbst enthalten sein, das heißt also in ihrer nicht reagierten Form. Dies bedingt bekanntermaßen allein die in der Regel molekular nicht einheitlich ablaufende Herstellungsreaktion, das heißt Polymerisation von Monomeren. Während einem bestimmten Monomer ein diskretes Molekulargewicht zuzuordnen ist, ist ein Polymer also immer eine Mischung von Molekülen, die sich in ihrem Molekulargewicht unterscheiden. Ein Polymer kann daher nicht durch ein diskretes Molekulargewicht beschrieben werden, sondern ihm werden bekanntermaßen immer mittlere Molekulargewichte, beispielsweise das oben genannten zahlenmittlere Molekulargewicht, zugeordnet.

In dem erfindungsgemäß einzusetzenden Polyether können alle n Reste R gleich sein. Ebenso ist es aber auch möglich, dass unterschiedliche Arten von Resten R vorhanden sind. Bevorzugt sind alle Reste R gleich.

Bei R handelt es sich bevorzugt um einen C₄-Alkylenrest. Besonders bevorzugt handelt es sich um einen Tetramethylenrest.

Ganz besonders bevorzugt handelt es sich bei dem erfindungsgemäß einzusetzenden Polyether um ein im Mittel diolisches, lineares Polytetrahydrofuran.

### Das Reaktionsprodukt

Die Herstellung des erfindungsgemäßen Reaktionsproduktes weist keine Besonderheiten auf. Die Komponenten (a) und (b) werden über allgemein bekannte Kondensations- und/oder Additionsreaktionen miteinander verknüpft. Umgesetzt werden also die funktionellen Gruppen X₁ und X₂ der Komponente (a) mit den Hydroxylgruppen der Komponente (b). Die Umsetzung kann beispielsweise in Masse oder in Lösung mit typischen organischen Lösemitteln bei Temperaturen von beispielsweise 50°C bis 300°C erfolgen. Selbstverständlich können auch typische Katalysatoren wie Schwefelsäure, Sulfonsäuren und/oder Tetraalkyltitanate, Zinkbeziehungsweise Zinnalkoxylate, Dialkylzinnoxide wie beispielsweise Di-n-butylzinnoxid oder organische Salze der Dialkylzinnoxide zum Einsatz kommen. Üblicherweise erfolgt zumindest bei Kondensationsreaktionen zudem der Einsatz eines Wasserabscheiders zum Auffangen des anfallenden Wassers.

Dabei werden die Komponenten (a) und (b) in einem molaren Verhältnis von 0,7/2,3 bis 1,6/1,7 bevorzugt von 0,8/2,2 bis 1,6/1,8 und ganz besonders bevorzugt von 0,9/2,1 bis 1,5/1,8 eingesetzt.

Durch die Einführung eines Carbonsäure-haltigen Restes Y ist das erfindungsgemäße Reaktionsprodukt carboxyfunktionell. Die Säurezahl des Reaktionsprodukts liegt von 10 bis 120 mg KOH/g, bevorzugt 12 bis 80 mg KOH/g, insbesondere bevorzugt 14 bis 50 mg KOH/g und ganz bevorzugt 15 bis 30 mg KOH/g. Die Säurezahl wird gemäß DIN 53402 bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das resultierende Reaktionsprodukt besitzt ein zahlenmittleres Molekulargewicht von 500 bis 15000 g/mol, bevorzugt 750 bis 12500 g/mol, ganz besonderes bevorzugt 1000 bis 10000 g/mol, insbesondere 1500 bis 7500 g/mol sowie nochmals bevorzugt 1500 bis 3000 g/mol.

Das erfindungsgemäße Reaktionsprodukt ist in der Regel hydroxyfunktionell, bevorzugt im Mittel dihydroxyfunktionell.

Besonders bevorzugte Ausführungsformen werden im Folgenden genannt:
a) In einer besonders bevorzugten Ausführungsform des erfindungsgemäßen Reaktionsprodukts wird bei der Herstellung als Verbindung (a) der Formel (I) ein Addukt eingesetzt, das durch Umsetzung der Hydroxylgruppen von mindestens einer aliphatischen Dihydroxycarbonsäure mit 4 bis 12 Kohlenstoffatomen mit den Isocyanatgruppen von mindestens einem organischen Diisocyanat, wobei das Diisocyanat im molaren Überschuss eingesetzt wird, erhalten wird.
b) In einer weiteren besonders bevorzugten Ausführungsform des erfindungsgemäßen Reaktionsprodukts handelt es sich bei dem erfindungsgemäß einzusetzenden Polyether um im Mittel diolisches

Reaktionsprodukts liegt von 10 bis 120 mg KOH/g, bevorzugt 12 bis 80 mg KOH/g, insbesondere bevorzugt 14 bis 50 mg KOH/g und ganz bevorzugt 15 bis 30 mg KOH/g. Die Säurezahl wird gemäß DIN 53402 bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das resultierende Reaktionsprodukt besitzt ein zahlenmittleres Molekulargewicht von 500 bis 15000 g/mol, bevorzugt 750 bis 12500 g/mol, ganz besonderes bevorzugt 1000 bis 10000 g/mol, insbesondere 1500 bis 7500 g/mol sowie nochmals bevorzugt 1500 bis 3000 g/mol.

Das erfindungsgemäße Reaktionsprodukt ist in der Regel hydroxyfunktionell, bevorzugt im Mittel dihydroxyfunktionell.

Besonders bevorzugte Ausführungsformen werden im Folgenden genannt:
a) In einer besonders bevorzugten Ausführungsform des erfindungsgemäßen Reaktionsprodukts wird bei der Herstellung als Verbindung (a) der Formel (I) ein Addukt eingesetzt, dass durch Umsetzung der Hydroxylgruppen von mindestens einer aliphatischen Dihydroxycarbonsäure mit 4 bis 12 Kohlenstoffatomen mit den Isocyanatgruppen von mindestens einem organischen Diisocyanat, wobei das Diisocyanat im molaren Überschuss eingesetzt wird, erhalten wird.
b) In einer weiteren besonders bevorzugten Ausführungsform des erfindungsgemäßen Reaktionsprodukts handelt es sich bei dem erfindungsgemäß einzusetzenden Polyether um im Mittel diolisches Polytetrahydrofuran und er besitzt zudem ein zahlenmittleres Molekulargewicht von 800 bis 3200 g/mol.
c) In einer weiteren besonders bevorzugten Ausführungsform des erfindungsgemäßen Reaktionsprodukts werden die Komponenten (a) und (b) in einem molaren Verhältnis von 0,9/2,1 bis 1,5/1,8 eingesetzt.
d) In einer weiteren besonders bevorzugten Ausführungsform des erfindungsgemäßen Reaktionsprodukts besitzt dieses eine Säurezahl von 15 bis 30 mg KOH/g.
e) In einer weiteren besonders bevorzugten Ausführungsform des erfindungsgemäßen Reaktionsprodukts besitzt dieses ein zahlenmittleres Molekulargewicht von 1500 bis 7500 g/mol.

In einer ganz besonders bevorzugten Ausführungsform des erfindungsgemäßen Reaktionsprodukts sind alle der unter a) bis e) angegebenen Merkmale in Kombination realisiert.

### Der pigmentierte wässrige Basislack

Die vorliegende Erfindung betrifft ferner einen pigmentierten wässrigen Basislack, welcher mindestens ein erfindungsgemäßes Reaktionsprodukt enthält. Alle oben genannten bevorzugten Ausführungsformen hinsichtlich des Reaktionsprodukts gelten selbstverständlich auch in Bezug auf den Basislack enthaltend das Reaktionsprodukt.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehendes Metallsubstrat zu applizieren und den zweiten Basislack direkt auf die erste Basislackschicht zu applizieren, ohne das letztere separat gehärtet wird. Um eine Basislackschicht beziehungsweise die oberste Basislackschicht insbesondere gegen Umwelteinflüsse zu schützen, wird auf dieser mindestens noch eine zusätzliche Klarlackschicht appliziert. Dies erfolgt in der Regel im nass-in-nass-Verfahren, das heißt der Klarlack wird appliziert, ohne dass die Basislackschicht gehärtet wird. Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten.

Die Summe über die gewichtsprozentualen Anteile, bezogen auf das Gesamtgewicht des pigmentierten wässrigen Basislacks, aller erfindungsgemäßen Reaktionsprodukte beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des erfindungsgemäßen Reaktionsprodukts unter 0,1 Gew.-% so ist es gegebenenfalls möglich, dass keine Verbesserung Stabilität gegen Nadelstiche mehr erzielt wird. Liegt der Gehalt bei mehr als 30 Gew.-% so können unter Umständen Nachteile auftreten, wie zum Beispiel eine Inkompatibilität des besagten Reaktionsprodukts im Basislack. Eine solche Inkompatibilität kann sich beispielsweise durch ungleichmäßigen Verlauf sowie durch Ausschwimmen oder Absetzen zeigen.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 1,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 1 bis 20 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

In einer ganz besonders bevorzugten Ausführungsform beträgt die Summe über die gewichtsprozentualen Anteile aller erfindungsgemäßen Reaktionsprodukte 1,5 bis 15 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 1,5 bis 15 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

In einer ebenfalls ganz besonders bevorzugten Ausführungsform beträgt die Summe über die gewichtsprozentualen Anteile aller erfindungsgemäßen Reaktionsprodukte 2 bis 12 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 2 bis 12 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.
erfindungsgemäße Reaktionsprodukte ausschließlich bevorzugte Ausführungsformen der erfindungsgemäßen Reaktionsprodukte.

In einer ganz besonders bevorzugten Ausführungsform beträgt die Summe über die gewichtsprozentualen Anteile aller erfindungsgemäßen Reaktionsprodukte 1,5 bis 15 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 1,5 bis 15 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

In einer ebenfalls ganz besonders bevorzugten Ausführungsform beträgt die Summe über die gewichtsprozentualen Anteile aller erfindungsgemäßen Reaktionsprodukte 2 bis 12 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 2 bis 12 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

Als Beispiele für in diesem Sinne bevorzugte Ausführungsformen der erfindungsgemäßen Reaktionsprodukte seien die folgenden besonders bevorzugten Ausführungsformen genannt:
a) In einer besonders bevorzugten Ausführungsform des erfindungsgemäßen Reaktionsprodukts wird bei der Herstellung als Verbindung (a) der Formel (I) ein Addukt eingesetzt, dass durch Umsetzung der Hydroxylgruppen von mindestens einer aliphatischen Dihydroxycarbonsäure mit 4 bis 12 Kohlenstoffatomen mit den Isocyanatgruppen von mindestens einem organischen Diisocyanat, wobei das Diisocyanat im molaren Überschuss eingesetzt wird, erhalten wird.
b) In einer weiteren besonders bevorzugten Ausführungsform des erfindungsgemäßen Reaktionsprodukts handelt es sich bei dem erfindungsgemäß einzusetzenden Polyether um im Mittel diolisches Polytetrahydrofuran und er besitzt zudem ein zahlenmittleres Molekulargewicht von 800 bis 3200 g/mol.
c) In einer weiteren besonders bevorzugten Ausführungsform des erfindungsgemäßen Reaktionsprodukts werden die Komponenten (a) und (b) in einem molaren Verhältnis von 0,9/2,1 bis 1,5/1,8 eingesetzt.
d) In einer weiteren besonders bevorzugten Ausführungsform des erfindungsgemäßen Reaktionsprodukts besitzt dieses eine Säurezahl von 15 bis 30 mg KOH/g.
e) In einer weiteren besonders bevorzugten Ausführungsform des erfindungsgemäßen Reaktionsprodukts besitzt dieses ein zahlenmittleres Molekulargewicht von 1500 bis 7500 g/mol.

Als weiteres Beispiel für in diesem Sinne bevorzugte Ausführungsformen der erfindungsgemäßen Reaktionsprodukte seien jene genannt, welche alle die unter a) bis e) angegebenen Merkmale in Kombination realisieren.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen. selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch oder thermisch und mit aktinischer Strahlung, also mittels "Dual Cure", härtbar sind.

Als thermisch härtende Basislacke sind solche bevorzugt, die als Bindemittel ein Polyurethanharz, bevorzugt ein hydroxygruppenhaltiges Polyurethanharz, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanat, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
oder
- funktionelle Gruppen, die durch Neutralisationsmittel in Anionen überführt werden können, und/oder anionische Gruppen (anionische Modifizierung)
und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240, die Säurezahl gemäß DIN 53402 bestimmt.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 20 Gew.-%.

Der einzusetzende pigmentierte wässrige Basislack kann zudem mindestens einen von den erfindungsgemäßen Reaktionsprodukten verschiedenen Polyester, insbesondere einen Polyester mit einem zahlenmittleren Molekulargewicht von 400 bis 5000 g/mol als Bindemittel enthalten. Entsprechende Polyester werden beispielsweise in DE 4009858 in Spalte 6, Zeile 53 bis Spalte 7, Zeile 61 und Spalte 10, Zeile 24 bis Spalte 13, Zeile 3 beschrieben.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher mindestens ein erfindungsgemäßes Reaktionsprodukt enthält. Alle vorstehend genannten Ausführungen hinsichtlich des erfindungsgemäßen Reaktionsprodukts und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

In einer besonderen Ausführungsform umfasst das Verfahren zur Herstellung einer mehrschichtigen Lackierung die folgenden Schritte:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,

Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,

Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht,
wobei (i) der eine Basislack oder (ii) mindestens einer der Basislacke ein erfindungsgemäßer Basislack ist,
gemeinsame Härtung der Basislackschicht (i) oder der Basislackschichten (ii) sowie der Klarlackschicht.

In der letztgenannten Ausführungsform wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird. Trotzdem gelingt auf diese Weise und insbesondere durch den Einsatz eines erfindungsgemäßen Basislacks enthaltend ein erfindungsgemäßes Reaktionsprodukt der Aufbau von Mehrschichtlackierungen, die kaum Nadelstiche aufweisen und damit optisch besonders herausragend sind. Dies ist insbesondere deshalb überraschend, als dass bei diesem Verfahren innerhalb des abschließenden Härtungsschritts eine besonders große Menge organischer Lösemittel beziehungsweise Wasser aus dem System entweichen muss (da eben keine separate Härtung einer Füllerschicht realisiert wird), wodurch die grundsätzliche Anfälligkeit für die Erzeugung von Nadelstichen stark ansteigt.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden in diesem Zusammenhang bevorzugt Basislacke eingesetzt, welche als Bindemittel ein Polyurethanharz aber keinen Vernetzer enthalten.
Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Reaktionsprodukts und des pigmentierten wässrigen Basislacks gelten entsprechend auch für die besagte Mehrschichtlackierung sowie für das erfindungsgemäße Verfahren. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen (Reparatur). Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235, "Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Polymers und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung des erfindungsgemäßen Reaktionsprodukts in pigmentierten wässrigen Basislacken zur Verbesserung der Stabilität gegen optische Fehlstellen, insbesondere Nadelstiche.

Die Qualität der Stabilität gegen Nadelstiche kann grundsätzlich anhand der Nadelstichgrenze sowie der Anzahl von Nadelstichen bestimmt werden. Die Nadelstichgrenze und deren Bestimmung können wie folgt beschrieben werden: Beim Aufbau einer Mehrschichtlackierung wird die Schichtdicke einer unterhalb der Klarlackschicht angeordneten Basislackschicht, die zudem nicht separat, sondern zusammen mit der Klarlackschicht eingebrannt wird, variiert. Bei dieser Beschichtungsschicht kann es sich beispielsweise um eine direkt auf der Elektrotauchlackschicht angeordnete Schicht und/oder eine direkt unterhalb der Klarlackschicht angeordnete Schicht handeln. Aus dem einleitend Ausgeführten folgt, dass die Tendenz zur Bildung von Nadelstichen mit der Vergrößerung der Schichtdicke dieser Schicht zunehmen muss, da entsprechend höhere Mengen an Luft, organischen Lösemitteln und/oder Wasser aus der Schicht entweichen müssen. Die Schichtdicke dieser Schicht, ab welcher Nadelstiche zu erkennen sind, wird als Nadelstichgrenze bezeichnet. Je höher die Nadelstichgrenze ist, desto besser ist augenscheinlich die Qualität der Stabilität gegen Nadelstiche. Auch die Anzahl von Nadelstichen ist selbstverständlich Ausdruck der Qualität der Stabilität gegen Nadelstiche.

Im Folgenden wird die Erfindung anhand von Beispielen erläutert.

### Beispiele

### Spezifizierung bestimmter eingesetzter Komponenten und Messmethoden

### Polyester 1 (P1):

Hergestellt entsprechend Beispiel D, Spalte 16, Z. 37 bis 59 der DE 4009858 A, wobei als organisches Lösemittel Butylglykol anstatt Butanol verwendet wurde, das heißt als Lösemittel Butylglykol und Wasser enthalten sind. Die entsprechende Dispersion des Polyesters hat einen Festkörpergehalt von 60 Gew.-%.

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Herstellung erfindungsgemäßer Reaktionsprodukte (ER):

### ER2:

In einem 4 l Edelstahlreaktor, ausgestattet mit Ankerrührer, Thermometer und Kühler wurden 134,10 g Dimethylolpropionsäure (DMPA) (1,0 mol), 488,58 g Tetramethylenxylylendiisocyanat (TMXDI der Fa. Cytec, 2,0 mol) sowie 415 g Methylethylketon eingewogen. Die Mischung wird unter Rühren auf 80°C erhitzt und solange gehalten, bis eine Probe keine kristallinen Anteile des DMPA mehr aufwies.

### Beispiele

### Spezifizierung bestimmter eingesetzter Komponenten und Messmethoden

### Polyester 1 (P1):

Hergestellt entsprechend Beispiel D, Spalte 16, Z. 37 bis 59 der DE 4009858 A, wobei als organisches Lösemittel Butylglykol anstatt Butanol verwendet wurde, das heißt als Lösemittel Butylglykol und Wasser enthalten sind. Die entsprechende Dispersion des Polyesters hat einen Festkörpergehalt von 60 Gew.-%.

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Herstellung erfindungsgemäßer Reaktionsprodukte (ER):

### ER2:

In einem 4 l Edelstahlreaktor, ausgestattet mit Ankerrührer, Thermometer und Kühler wurden 134,10 g Dimethylolpropionsäure (DMPA) (1,0 mol), 488,58 g Tetramethylenxylylendiisocyanat (TMXDI der Fa. Cytec, 2,0 mol) sowie 415 g Methylethylketon eingewogen. Die Mischung wird unter Rühren auf 80°C erhitzt und solange gehalten, bis eine Probe keine kristallinen Anteile des DMPA mehr aufwies. Zu dieser Reaktionsmischung wurden dann 2000 g lineares, diolisches PolyTHF1000 (Fa. BASF SE) mit einer OH-Zahl von 112 mg KOH / g (2,0 mol) zugegeben (OH-Zahl Bestimmung nach DIN 53240). Das Reaktionsgemisch wird weiterhin bei 80°C gehalten. Der Reaktionsfortschritt wurde über die Bestimmung des Gehaltes an NCO-Gruppen mittels Titration verfolgt (DIN EN ISO 11909). Nach Erreichen eines NCO-Gehaltes von kleiner/gleich 0,1% wurden zum Reaktionsgemisch 10 g n-Butanol zugegeben. Danach wurde eine weitere Stunde bei der angegebenen Temperatur gerührt. Das zur Reaktion benötigte Methylethylketon wurde anschließend im Vakuum angezogen. Man erhält ein bei Raumtemperatur kristallines Harz, das eine Säurezahl von 21,2 mg KOH/g aufweist.

Der Feststoffgehalt des Harzes liegt bei 100% (gemessen bei 130°C für 1h im Umluftofen an einer Probe von 1 g unter Zugabe 1 ml Methylethylketon) Zahlenmittleres Molekulargewicht: 2470 g/mol
Viskosität 70%ig in Butylglykol: 1280 mPas,
(gemessen bei 23°C mit einem Rotationsviskosimeter der Fa. Brookfield, Typ CAP 2000+, Spindel 3, Scherrate: 5000 s⁻¹)

### ER3:

In einem 4 l Edelstahlreaktor, ausgestattet mit Ankerrührer, Thermometer und Kühler wurden 134,10 g Dimethylolpropionsäure (DMPA), 524,0 g bis(4-isocyanotocyclohexyl)methan (Desmodur-W® der Fa. Bayer Material Science, 2,0 mol) sowie 439 g Methylethylketon eingewogen. Die Mischung wird unter Rühren auf Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 26 |
| Deionisiertes Wasser | 13,6 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), Rheologiemittel | 0,6 |
| P1 | 3,2 |
| TMDD (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 20,4 |
| TMDD (BASF) | 1,6 |
| 3 Gew.-%ige wässrige Rheovis AS S130 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Herstellung eines erfindungsgemäßen Wasserbasislacks 2 (E2)

Zur Herstellung des erfindungsgemäßen Wasserbasislacks E2 wurde ein Lack analog der Herstellung des Vergleichs-Wasserbasislacks 1 (V1) hergestellt, wobei anstelle des Polyesters P1 sowohl in der wässrigen Phase als auch in der organischen Phase ER2 eingesetzt wurde. ER2 wurde dabei als 100 %-ige Substanz (bezogen auf Festkörper) eingesetzt. Bezogen auf den Festkörperanteil (nicht-flüchtigen Anteil) wurde in E2 dieselbe Menge ER2 eingesetzt, wie in V1 der Polyester P1 eingesetzt wurde. Die durch den unterschiedlichen Festkörper von ER2 und der Dispersion P1 bedingten unterschiedlichen Mengen an Butylglykol wurden in der Formulierung E2 durch entsprechenden Zusatz von Butylglykol ausgeglichen.

### Herstellung von erfindungsgemäßen Basislacken 3 und 4 (E3, E4)

Analog der Herstellung von E2 wurden unter Einsatz der Reaktionsprodukte ER3 und ER4 erfindungsgemäße Basislacke E3 und E4 hergestellt. Der Ausgleich der unterschiedlichen Festkörper in Bezug auf die Polyesterdispersion P1 erfolgte wiederum durch entsprechenden Zusatz von Butylglykol.

Tabelle 1 zeigt nochmals die in den Wasserbasislacken (WBL) V1 und E2 bis E4 eingesetzten Polyester und Reaktionsprodukte sowie deren Anteile (bezogen auf die Gesamtmenge der Wasserbasislacke) als Übersicht.

**Tabelle 1: Zusammensetzungen der WBL V1 und E2 bis E4**

| **WBL** | **[Gew.-%]** | **Reaktionsprodukt** |
|---|---|---|
| V1 | 4,92 | P1 |
| E2 | 4,92 | ER2 |
| E3 | 4,92 | ER3 |
| E4 | 4,92 | ER4 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 20,4 | |
| TMDD (BASF) | 1,6 | |
| 3 Gew.-%ige wässrige Rheovis AS S130 Lösung; Rheologiemittel, erhältlich von BASF | 3,9 | |

| **Organische Phase** | | |
|---|---|---|
| Mischung zweier handelsüblicher Aluminiumpigmente, erhältlich von Firma Altana-Eckart | 6,2 | |
| Butylglykol | 7,5 | |
| P1 | 5 | |

### Herstellung eines erfindungsgemäßen Wasserbasislacks 2 (E2)

Zur Herstellung des erfindungsgemäßen Wasserbasislacks E2 wurde ein Lack analog der Herstellung des Vergleichs-Wasserbasislacks 1 (V1) hergestellt, wobei anstelle des Polyesters P1 sowohl in der wässrigen Phase als auch in der organischen Phase ER2 eingesetzt wurde. ER2 wurde dabei als 100 %-ige Substanz (bezogen auf Festkörper) eingesetzt. Bezogen auf den Festkörperanteil (nicht-flüchtigen Anteil) wurde in E2 dieselbe Menge ER2 eingesetzt, wie in V1 der Polyester P1 eingesetzt wurde. Die durch den unterschiedlichen Festkörper von ER2 und der Dispersion P1 bedingten unterschiedlichen Mengen an Butylglykol wurden in der Formulierung E2 durch entsprechenden Zusatz von Butylglykol ausgeglichen.

### Herstellung von erfindungsgemäßen Basislacken 3 und 4 (E3, E4)

Analog der Herstellung von E2 wurden unter Einsatz der Reaktionsprodukte ER3 und ER4 erfindungsgemäße Basislacke E3 und E4 hergestellt. Der Ausgleich der unterschiedlichen Festkörper in Bezug auf die Polyesterdispersion P1 erfolgte wiederum durch entsprechenden Zusatz von Butylglykol.

Tabelle 1 zeigt nochmals die in den Wasserbasislacken (WBL) V1 und E2 bis E4 eingesetzten Polyester und Reaktionsprodukte sowie deren Anteile (bezogen auf die Gesamtmenge der Wasserbasislacke) als Übersicht.

**Tabelle 1: Zusammensetzungen der WBL V1 und E2 bis E4**

| **WBL** | **[Gew.-%]** | **Reaktionsprodukt** |
|---|---|---|
| V1 E1 | 4,92 | P1 |
| E2 | 4,92 | ER2 |
| E3 | 4,92 | ER3 |
| E4 | 4,92 | ER4 |

### Vergleich zwischen den Wasserbasislacken V1 und E2 bis E4

Zur Bestimmung der Nadelstichgrenze und der Nadelstichanzahl wurden Mehrschichtlackierungen nach der folgenden allgemeinen Vorschrift hergestellt:
Ein mit einer KTL beschichtetes Stahlblech der Abmessungen 30 x 50 cm wurde an einer Längskante mit einem Klebstreifen versehen, um nach der Beschichtung die Schichtdickendifferenzen ermitteln zu können. Der jeweilige Wasserbasislack wurde keilförmig elektrostatisch appliziert. Die resultierende Wasserbasislackschicht wurde während 4 Minuten bei Raumtemperatur abgelüftet und anschließend während 10 Minuten im Umluftofen bei 70°C zwischengetrocknet. Auf die getrocknete Wasserbasislackschicht wurde ein üblicher Zweikomponentenklarlack in einer Schichtdicke von 35 Mikrometern elektrostatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze und die Anzahl an Nadelstichen ab dieser Schichtdicke (das heißt die Gesamtanzahl an Nadelstichen auf dem lackierten Blech) bestimmt. Die Ergebnisse finden sich in der Tabelle 2.

**Tabelle 2: Nadelstichgrenze und Nadelstichanzahl von Mehrschichtlackierungen, die unter Einsatz der Wasserbasislacke V1 und E2 bis E4 hergestellt wurden**

| **WBL** | **Nadelstichgrenze (Mikrometer)** | **Nadelstichanzahl** |
|---|---|---|
| V1 | 22 | 25 |
| E2 | 27 | 1 |
| E3 | 29 | 2 |
| E4 | 24 | 10 |

Die Ergebnisse untermauern, dass der Einsatz der erfindungsgemäßen Reaktionsprodukte beziehungsweise der erfindungsgemäßen Wasserbasislacke die Nadelstichgrenze im Vergleich zum Vergleichs-Wasserbasislack V1 deutlich erhöht und gleichzeitig die Nadelstichanzahl vermindert.

### Herstellung eines silbernen Vergleich-Wasserbasislacks 2 (V2)

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B:**

| Komponente | Gewichtsteile |
|---|---|
| **Wässrige Phase** | |
| 3%ige Na-Mg-Schichtsilikatlösung | 26 |
| Deionisiertes Wasser | 21,7 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), Rheologiemittel | 0,6 |
| P1 | 13,3 |
| TMDD (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 1,8 |
| TMDD (BASF) | 1,6 |
| 3 Gew.-%ige wässrige Rheovis AS S130 Lösung; Rheologiemittel, erhältlich von BASF | 3,9 |
| | |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Herstellung eines erfindungsgemäßen Wasserbasislackse 6 (E6)

Analog der Herstellung von E2 bis E4 wurden unter Einsatz des Reaktionsprodukts ER4 auf Basis des Vergleichsbasislacks V2 (Tabelle B) und unter Ersatz der Polyesterdispersion P1 der erfindungsgemäße Basislacke E6 (enthaltend ER4) hergestellt. Der Ausgleich der unterschiedlichen Festkörper in Bezug auf die Polyesterdispersion P1 erfolgte wiederum durch entsprechenden Zusatz von Butylglykol.

**Tabelle 3: Zusammensetzungen der WBL V2 und E6**

| **WBL** | **[Gew.-%]** | **Reaktionsprodukt** |
|---|---|---|
| V2 | 10,98 | P1 |
| E6 | 10,98 | ER4 |

### Vergleich zwischen den Wasserbasislacken V2 und E6

Entsprechend der oben für die Mehrschichtlackierungen, die unter Einsatz der Wasserbasislacke V1 und bis E4 hergestellt wurden, wurden Mehrschichtlackierungen unter Einsatz der Wasserbasislacke V2 und E6 hergestellt. Auch die Auswertung hinsichtlich der Nadelstichgrenze und Nadelstichanzahl erfolgte analog. Die Ergebnisse finden sich in der Tabelle 4.

**Tabelle 4: Nadelstichgrenze und Nadelstichanzahl von Mehrschichtlackierungen, die unter Einsatz der Wasserbasislacke V2 und E6 hergestellt wurden**

| **WBL** | **Nadelstichgrenze (Mikrometer)** | **Nadelstichanzahl** |
|---|---|---|
| V2 | 14 | 63 |
| E6 | 26 | 8 |

## Patentansprüche

1. Pigmentierter wässriger Basislack enthaltend ein Polyether-basiertes Reaktionsprodukt, welches herstellbar ist durch Umsetzung von
(a) mindestens einer Verbindung der Formel (I)
X₁ - Y - X₂ (I)
worin
X₁ und X₂, unabhängig voneinander, für eine gegenüber Hydroxylgruppen reaktive funktionelle Gruppe stehen und
Y ein divalenter aliphatischer oder araliphatischer, carboxyfunktioneller organischer Rest mit einem zahlenmittleren Molekulargewicht von 100 bis 1000 g/mol (bestimmt wie in der Beschreibung angegeben) ist
mit
(b) mindestens einem Polyether der allgemeinen Strukturformel (II) 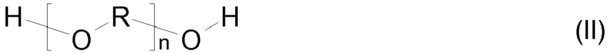 worin
R ein C₃- bis C₆-Alkylenrest ist und n entsprechend so gewählt ist, dass der Polyether (b) ein zahlenmittleres Molekulargewicht von 200 bis 4000 g/mol (bestimmt wie in der Beschreibung angegeben) besitzt,
wobei die Komponenten (a) und (b) bei der Umsetzung in einem molaren Verhältnis von 0,7/2,3 bis 1,6/1,7 eingesetzt werden und das resultierende Reaktionsprodukt ein zahlenmittleres Molekulargewicht von 500 bis 15000 g/mol (bestimmt wie in der Beschreibung angegeben) aufweist und eine Säurezahl von 10 bis 120 mg KOH/g besitzt.

2. Basislack nach Anspruch 1, **dadurch gekennzeichnet, dass** der Polyether (b) ein zahlenmittleres Molekulargewicht von 800 bis 3200 g/mol besitzt.

3. Basislack nach Anspruch 1 oder 2, **dadurch gekennzeichnet, dass** es sich bei der Gruppe R gemäß der allgemeinen Strukturformel (II) um Tetramethylenreste handelt.

4. Basislack nach einem der Ansprüche 1 bis 3, **dadurch gekennzeichnet, dass** die Komponenten (a) und (b) in einem molaren Verhältnis von 0,9/2,1 bis 1,5/1,8 eingesetzt werden.

5. Basislack nach einem der Ansprüche 1 bis 4, **dadurch gekennzeichnet, dass** das Polyether-basierte Reaktionsprodukt ein zahlenmittleres Molekulargewicht von 1500 bis 7500 g/mol besitzt.

6. Basislack nach einem der Ansprüche 1 bis 5, **dadurch gekennzeichnet, dass** die Verbindung (a) der Formel (I) herstellbar ist durch Reaktion mindestens einer Dihydroxycarbonsäure mit mindestens einem organischen Diisocyanat, wobei die Hydroxylgruppen der Dihydroxycarbonsäure mit Isocyanatgruppen des mindestens einen organischen Diisocyanats zu Urethanbindungen umgesetzt werden und wobei das Diisocyanat im molaren Überschuss eingesetzt wird.

7. Basislack nach Anspruch 6, **dadurch gekennzeichnet, dass** eine gesättigte aliphatische Dihydroxycarbonsäure mit 4 bis 12 Kohlenstoffatomen, bevorzugt Dimethylolpropionsäure, eingesetzt wird und das molare Verhältnis von Dihydroxycarbonsäure und organischem Diisocyanat von 0,9/2,1 bis 1,5/1,8 ist.

8. Pigmentierter wässriger Basislack gemäß einem der Ansprüche 1 bis 87, **dadurch gekennzeichnet, dass** die Summe über die gewichtsprozentualen Anteile, bezogen auf das Gesamtgewicht des pigmentierten wässrigen Basislacks, aller Polyether-basierten Reaktionsprodukte 0,1 bis 30 Gew.-% beträgt.

9. Pigmentierter wässriger Basislack nach einem der Ansprüche 1 bis 98, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

10. Polyether-basiertes Reaktionsprodukt, welches herstellbar ist durch Umsetzung von
(a) mindestens einer Verbindung der Formel (I)
X₁ - Y - X₂ (I)
worin
X₁ und X₂, unabhängig voneinander, für eine gegenüber Hydroxylgruppen reaktive funktionelle Gruppe stehen und
Y ein divalenter aliphatischer oder araliphatischer, carboxyfunktioneller organischer Rest mit einem zahlenmittleren Molekulargewicht von 100 bis 1000 g/mol (bestimmt wie in der Beschreibung angegeben) ist
mit
(b) mindestens einem Polyether der allgemeinen Strukturformel (II) 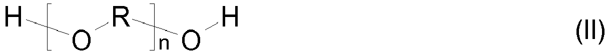 worin
R ein C₃- bis C₆-Alkylenrest ist und n entsprechend so gewählt ist, dass der Polyether (b) ein zahlenmittleres Molekulargewicht von 200 bis 4000 g/mol (bestimmt wie in der Beschreibung angegeben) besitzt,
wobei die Komponenten (a) und (b) bei der Umsetzung in einem molaren Verhältnis von 0,7/2,3 bis 1,6/1,7 eingesetzt werden und das resultierende Reaktionsprodukt ein zahlenmittleres Molekulargewicht von 500 bis 15000 g/mol (bestimmt wie in der Beschreibung angegeben) aufweist und eine Säurezahl von 10 bis 120 mg KOH/g besitzt.

11. Verwendung eines Reaktionsprodukts gemäß Anspruch 10 in einem pigmentierten wässrigen Basislack zur Verbesserung der Stabilität gegen optische Fehlstellen in Lackierungen, welche unter Einsatz des Basislacks hergestellt werden.

12. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß einem der Ansprüche 1 bis 9 eingesetzt wird.

13. Verfahren nach Anspruch 12, **dadurch gekennzeichnet, dass** das Substrat ein mit einer gehärteten Elektrotauchlackschicht beschichtetes metallisches Substrat ist und alle auf die Elektrotauchlackschicht applizierten Schichten gemeinsam gehärtet werden.

14. Mehrschichtlackierung, herstellbar nach dem Verfahren gemäß Anspruch 12 oder 13.

## Claims

1. Pigmented aqueous basecoat material comprising a polyether-based reaction product which is preparable by reaction of
(a) at least one compound of the formula (I)
X₁ - Y - X₂ (I)
in which
X₁ and X₂, independently of one another, are each a functional group which is reactive toward hydroxyl groups, and
Y is a divalent aliphatic or araliphatic, carboxy-functional organic radical having a number-average molecular weight of 100 to 1000 g/mol
(determined as specified in the description),
with
(b) at least one polyether of the general structural formula (II) 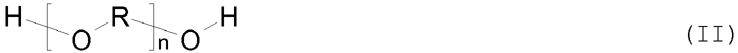 in which
R is a C₃ to C₆ alkylene radical and n is selected accordingly such that the polyether (b) possesses a number-average molecular weight of 200 to 4000 g/mol (determined as specified in the description),
where components (a) and (b) are used in the reaction in a molar ratio of 0.7/2.3 to 1.6/1.7 and the resulting reaction product possesses a number-average molecular weight of 500 to 15 000 g/mol (determined as specified in the description) and an acid number of 10 to 120 mg KOH/g.

2. Basecoat material according to Claim 1, **characterized in that** the polyether (b) possesses a number-average molecular weight of 800 to 3200 g/mol.

3. Basecoat material according to Claim 1 or 2, **characterized in that** the group R in the general structural formula (II) comprises tetramethylene radicals.

4. Basecoat material according to any of Claims 1 to 3, **characterized in that** components (a) and (b) are used in a molar ratio of 0.9/2.1 to 1.5/1.8.

5. Basecoat material according to any of Claims 1 to 4, **characterized in that** the polyether-based reaction product possesses a number-average molecular weight of 1500 to 7500 g/mol.

6. Basecoat material according to any of Claims 1 to 5, **characterized in that** the compound (a) of the formula (I) is preparable by reaction of at least one dihydroxycarboxylic acid with at least one organic diisocyanate, the hydroxyl groups of the dihydroxycarboxylic acid being reacted with isocyanate groups of the at least one organic diisocyanate to form urethane bonds, and the diisocyanate being used in a molar excess.

7. Basecoat material according to Claim 6, **characterized in that** a saturated aliphatic dihydroxycarboxylic acid having 4 to 12 carbon atoms is used, preferably dimethylolpropionic acid, and the molar ratio of dihydroxycarboxylic acid to organic diisocyanate is from 0.9/2.1 to 1.5/1.8.

8. The pigmented aqueous basecoat material according to any of Claims 1 to 7, **characterized in that** the sum total of the weight-percentage fractions, based on the total weight of the pigmented aqueous basecoat material, of all the polyether-based reaction products is 0.1 to 30 wt%.

9. The pigmented aqueous basecoat material according to any of Claims 1 to 8, **characterized in that** it comprises a polyurethane resin that is grafted by means of olefinically unsaturated monomers and that also comprises hydroxyl groups, and a melamine resin.

10. Polyether-based reaction product which is preparable by reaction of
(a) at least one compound of the formula (I)
X₁ - Y - X₂ (I)
in which
X₁ and X₂, independently of one another, are each a functional group which is reactive toward hydroxyl groups, and
Y is a divalent aliphatic or araliphatic, carboxy-functional organic radical having a number-average molecular weight of 100 to 1000 g/mol (determined as specified in the description),
with
(b) at least one polyether of the general structural formula (II) 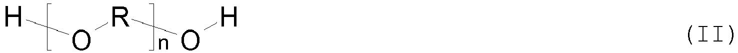 in which
R is a C₃ to C₆ alkylene radical and n is selected accordingly such that the polyether (b) possesses a number-average molecular weight of 200 to 4000 g/mol (determined as specified in the description),
where components (a) and (b) are used in the reaction in a molar ratio of 0.7/2.3 to 1.6/1.7 and the resulting reaction product possesses a number-average molecular weight of 500 to 15 000 g/mol (determined as specified in the description) and an acid number of 10 to 120 mg KOH/g.

11. Use of a reaction product according to Claim 10 in a pigmented aqueous basecoat material for improving the stability with respect to optical defects in paint systems produced using basecoat material.

12. Method for producing a multicoat paint system, where
(1) a pigmented aqueous basecoat material is applied to a substrate,
(2) a polymer film is formed from the coating material applied in stage (1),
(3) a clearcoat material is applied to the resulting basecoat film, and then
(4) Basecoat film is cured together with the clearcoat film,
**characterized in that** a pigmented aqueous basecoat material according to any of Claims 1 to 9 is used in stage (1).

13. Method according to Claim 12, **characterized in that** the substrate is a metallic substrate coated with a cured electrocoat film, and all of the films applied to the electrocoat film are cured jointly.

14. Multicoat paint system producible by the method according to Claim 12 or 13.

## Revendications

1. Vernis de base aqueux pigmenté contenant un produit de réaction à base de polyéther, qui peut être fabriqué par mise en réaction de
(a) au moins un composé de formule (I)
X₁-Y-X₂ (I)
dans laquelle
X₁ et X₂ représentent indépendamment l'un de l'autre un groupe fonctionnel réactif avec les groupes hydroxyle,
et
Y représente un radical organique bivalent aliphatique ou araliphatique à fonction carboxy, ayant un poids moléculaire moyen en nombre de 100 à 1 000 g/mol (déterminé tel qu'indiqué dans la description),
avec
(b) au moins un polyéther de la formule structurale générale (II) 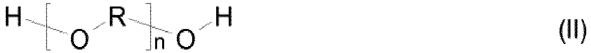 dans laquelle
R représente un radical alkylène en C₃ à C₆ et n est choisi de telle sorte que le polyéther (b) présente un poids moléculaire moyen en nombre de 200 à 4 000 g/mol (déterminé tel qu'indiqué dans la description),
les composants (a) et (b) étant utilisés lors de la réaction en un rapport molaire de 0,7/2,3 à 1,6/1,7, et le produit de réaction résultant présentant un poids moléculaire moyen en nombre de 500 à 15 000 g/mol (déterminé tel qu'indiqué dans la description) et présentant un indice d'acidité de 10 à 120 mg KOH/g.

2. Vernis de base selon la revendication 1, **caractérisé en ce que** le polyéther (b) présente un poids moléculaire moyen en nombre de 800 à 3 200 g/mol.

3. Vernis de base selon la revendication 1 ou 2, **caractérisé en ce que** le groupe R selon la formule structurale générale (II) consiste en des radicaux tétraméthylène.

4. Vernis de base selon l'une quelconque des revendications 1 à 3, **caractérisé en ce que** les composants (a) et (b) sont utilisés en un rapport molaire de 0,9/2,1 à 1,5/1,8.

5. Vernis de base selon l'une quelconque des revendications 1 à 4, **caractérisé en ce que** le produit de réaction à base de polyéther présente un poids moléculaire moyen en nombre de 1 500 à 7 500 g/mol.

6. Vernis de base selon l'une quelconque des revendications 1 à 5, **caractérisé en ce que** le composé (a) de formule (I) peut être fabriqué par réaction d'au moins un acide dihydroxycarboxylique avec au moins un diisocyanate organique, les groupes hydroxyle de l'acide dihydroxycarboxylique étant mis en réaction avec des groupes isocyanate dudit au moins un diisocyanate organique pour former des liaisons uréthane, et le diisocyanate étant utilisé en excès molaire.

7. Vernis de base selon la revendication 6, **caractérisé en ce qu'**un acide dihydroxycarboxylique aliphatique saturé contenant 4 à 12 atomes de carbone, de préférence l'acide diméthylolpropionique, est utilisé, et le rapport molaire entre l'acide dihydroxycarboxylique et le diisocyanate organique est de 0,9/2,1 à 1,5/1,8.

8. Vernis de base aqueux pigmenté selon l'une quelconque des revendications 1 à 7, **caractérisé en ce que** la somme des proportions en pourcentage en poids, par rapport au poids total du vernis de base aqueux pigmenté, de tous les produits de réaction à base de polyéther est de 0,1 à 30 % en poids.

9. Vernis de base aqueux pigmenté selon l'une quelconque des revendications 1 à 8, **caractérisé en ce qu'**il comprend une résine de polyuréthane greffée avec des monomères oléfiniquement insaturés, qui contient en outre des groupes hydroxyle, ainsi qu'une résine de mélamine.

10. Produit de réaction à base de polyéther, qui peut être fabriqué par mise en réaction de
(a) au moins un composé de formule (I)
X₁-Y-X₂ (I)
dans laquelle
X₁ et X₂ représentent indépendamment l'un de l'autre un groupe fonctionnel réactif avec les groupes hydroxyle, et
Y représente un radical organique bivalent aliphatique ou araliphatique à fonction carboxy, ayant un poids moléculaire moyen en nombre de 100 à 1 000 g/mol (déterminé tel qu'indiqué dans la description),
avec
(b) au moins un polyéther de la formule structurale générale (II) 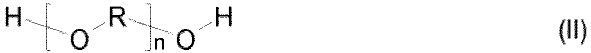 dans laquelle
R représente un radical alkylène en C₃ à C₆ et n est choisi de telle sorte que le polyéther (b) présente un poids moléculaire moyen en nombre de 200 à 4 000 g/mol (déterminé tel qu'indiqué dans la description),
les composants (a) et (b) étant utilisés lors de la réaction en un rapport molaire de 0,7/2,3 à 1,6/1,7, et le produit de réaction résultant présentant un poids moléculaire moyen en nombre de 500 à 15 000 g/mol (déterminé tel qu'indiqué dans la description) et présentant un indice d'acidité de 10 à 120 mg KOH/g.

11. Utilisation d'un produit de réaction selon la revendication 10 dans un vernis de base aqueux pigmenté pour améliorer la stabilité contre les défauts optiques dans des vernissages qui sont fabriqués en utilisant le vernis de base.

12. Procédé de fabrication d'un vernissage multicouche, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent,
**caractérisé en ce qu'**un vernis de base aqueux pigmenté selon l'une quelconque des revendications 1 à 9 est utilisé à l'étape (1).

13. Procédé selon la revendication 12, **caractérisé en ce que** le substrat est un substrat métallique revêtu avec une couche de vernis pour dépôt électrolytique durcie et toutes les couches appliquées sur la couche de vernis pour dépôt électrolytique sont durcies ensemble.

14. Vernissage multicouche, pouvant être fabriqué par le procédé selon la revendication 12 ou 13.
